(19) Europäisches Patentamt
European Patent Office
Office européen des brevets

(11) Veröffentlichungsnummer: **0 575 978 A2**

# (12) EUROPÄISCHE PATENTANMELDUNG

(21) Anmeldenummer: **93110011.9**

(22) Anmeldetag: **23.06.93**

(51) Int. Cl.$^5$: **C08B 37/16**, C08F 251/00, A61K 31/715

(30) Priorität: **25.06.92 DE 4220734**

(43) Veröffentlichungstag der Anmeldung: **29.12.93 Patentblatt 93/52**

(84) Benannte Vertragsstaaten: **AT BE CH DE DK ES FR GB GR IE IT LI LU MC NL PT SE**

(71) Anmelder: **MEDICE Chem.-Pharm. Fabrik Pütter GmbH & Co. KG**
**Kuhloweg 37-39**
**D-58638 Iserlohn(DE)**

(72) Erfinder: **Szejtli, Jozsef, Prof.**
**c/o Fa. Cyclolab Laboratories,**
**Postfach 17**
**H-1525 Budapest(HU)**
Erfinder: **Pütter, Sigurd, Dr.**
**c/o Medice,**
**Kuhloweg 37 - 39**
**W-5860 Iserlohn(DE)**

(74) Vertreter: **Reinhard, Skuhra, Weise**
**Postfach 44 01 51**
**D-80750 München (DE)**

## (54) Lipophile Cyclodextrinpolymere.

(57) Es werden neu lipophile Cyclodextrinpolymerderivate, Verfahren zur Herstellung dieser Cyclodextrinpolymerderivate sowie Ihre Verwendungen beschrieben.

EP 0 575 978 A2

Die Erfindung betrifft neue lipophile Cyclodextrinpolymerderivate, Verfahren zur Herstellung dieser Cyclodextrinpolymerderivate sowie ihre Verwendungen.

Es ist bekannt, daß die Hydroxylgruppen auf den Cyclodextrinmolekülen derivatisierbar sind. Die Reaktivitat der Hydroxylgruppen an verschiedenen Positionen sowie die Verfahren zur Derivatisierung sind in verschiedenen Artikeln beschrieben (Liptak, A., Fugedi P., Szurmai, Z., Imre, J., Nanasi, P., Szejtli, J.: Proc. 1. Intern. Symp. für Cyclodextrine, Reidel, Dordrecht (1982) 275, Croft, A., Bartsch, R.A.: Tetrahedron 39 (1983) 1417).

Cyclodextrinderivate mit einem hohen Molekulargewicht, die mehrere Cyclodextrinringe in einem Molekül enthalten, sind durch Vernetzung mit bi- oder polyfunktionalen Reagenzien (z.B. Diepoxiden, Diisocyanaten), die mit den Hydroxylgruppen reagieren können, herstellbar (Zsadon, B., Fenyvesi,E.: Proc. 1. Intern. Symp. für Cyclodextrine, Reidel, Dordrecht (1982) 327).

Diese sogenannten Cyclodextrinpolymere können von einem niedrigeren Molekulargewicht sein und sind dann wasserlöslich oder sie weisen ein höheres Molekulargewicht auf und sind dann in Wasser quellfähig. Nicht alle Hydroxylgruppen sind mit Querverbindungen besetzt; die verbleibenden Hydroxylgruppen können mit anderen funktionellen Gruppen substituiert sein. Derart hergestellte Cyclodextrinpolymere sind für verschiedene Zwecke verwendbar.

Mit ionischen Gruppen modifizierte Cyclodextrinpolymere sind bekannt. Die wasserlöslichen Polymere mit ionischen Gruppen (Ung. Patent 191 101 (1986), US-Patent 4 545 152) werden bevorzugt in der Fotoindustrie verwendet (Szucs, M., Kiss, I.: Inf. Rec. mater, 14 (1986) 383 und 16 (1988) 439). Die Polymere mit den ionischen Gruppen, die im Wasser quellfähig sind, werden als spezifische Ionenaustauscher mit Komplexbildungsfähigkeit verwendet. Cyclodextrine mit Carboxymethyl- und Sulfalkylgruppen besitzen Kationenaustausch-, die mit Diallylaminogruppen substituierten Anionenaustauscheigenschaften (Jap. Patente 59 26142, 59 150549, 59 36549, 1984). Cyclodextrinpolymere mit Aminoalkylaminogruppen sind zur Enzymimmobilisierung verwendbar (Jap. Patent 60248729, 1986). N-Methyl-dihydronicotinamid-$\beta$-cyclodextrinpolymer ist als künstliches Enzym patentiert ( JP-62275102, 1987 ).

Es ist eine Aufgabe der Erfindung, neue Cyclodextrinpolymerderivate mit lipophilen Eigenschaften herzustellen.

Diese Aufgabe wird erfindungsgemäß durch lipophile Cyclodextrinderivate der folgenden allgemeinen Formel gelöst:

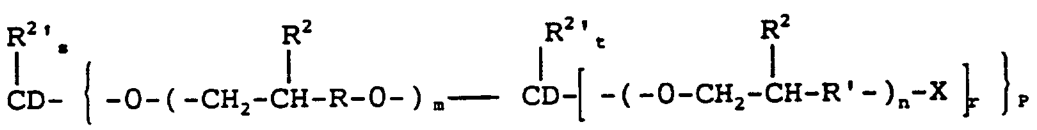

wobei

CD aus einem $\alpha$-, $\beta$- und/oder gamma-Cyclodextrinmolekül durch Abspaltung von p+s- oder 1+t+r-Hydroxylgruppen stammt, R und R'unabhängig voneinander aus der folgenden Gruppe ausgewählt werden :

$-CH_2-$ , $-CHOH-CH_2-$ , $-CH_2-O-(CH_2)_2-O-CH_2-CHOH-CH_2-$ , $-CH_2-O-CH_2-CHOH-CH_2-$ or $-CH_2-O-(CH_2)_4-O-CH_2-CHOH-CH_2-$

X $OR^1$ oder $R^2$ bedeutet, wobei

$R^1$ ein Wasserstoffatom oder - falls r nicht 0 ist - eine Gruppe darstellt, welche durch die Abspaltung eines Wasserstoffatoms aus einer Hydroxylgruppe aus einem $\alpha$-, $\beta$- oder $\gamma$-Cyclodextrinmolekül erhalten wird.

$R^2$ gleiche oder verschiedene Bedeutungen aufweist, nämlich $OR^3$ oder eine Alkylthio-, Alkylsulfonyl-, Alkylsulfinyl- oder Aminoalkylgruppe mit 1-20 Kohlenstoffatomen, bevorzugt mit 1 bis 6 C-Atomen, oder eine Gruppe darstellt, welche durch die Abspaltung eines Wasserstoffatoms aus einer Hydroxylgruppe aus einem $\alpha$-, $\beta$- oder $\gamma$-Cyclodextrinmolekül erhalten wird,

$R^{2'}$ der Bedeutung von $R^2$ entspricht, jedoch keine der Gruppen darstellt, die aus den Cyclodextrinmolekülen erhalten wurden, welche durch die Abspaltung eines Wasserstoffatoms aus einer Hydroxylgruppe aus einem $\alpha$-, $\beta$- oder $\gamma$-Cyclodextrinmolekül erhalten werden,

$R^3$ eine Alkyl-Gruppe mit 1 - 20 C-Atomen, bevorzugt mit 1 bis 6 C-Atomen, oder eine Aralkyl-oder Alkylarylgruppe darstellt, wobei die Arylgruppe aus einer aromatischen oder heteroaromatischen Verbindung abstammt, oder $R_3$ eine $C_1$ - $C_7$-Acylgruppe oder eine unsubstituierte oder $C_1$ - $C_5$-mono-, di- oder trisubstituierte Silylgruppe darstellt.

m und n unabhängig voneinander ein ganzzahliges von 1 - 10 sind,

r ein ganzzahliges von 0 - 23 ist,

p ein ganzzahliges von 0 - 24 ist,

s und t unabhängig voneinander ein ganzzahliges von 0 - 7 sind,
m, n, r und t, einschließlich in den Seitenketten, innerhalb einer Einheit je unterschiedlich sein können,
und, falls CD eine Gruppe ist, die aus einem α-Cyclodextrin stammt, $p+s<18$ und $r+t<17$ sind,
und, falls CD eine Gruppe ist, die aus einem β-Cyclodextrin stammt, $p+s<21$ und $r+t<20$ sind,
und, falls CD eine Gruppe ist, die aus einem gamma-Cyclodextrin stammt, $p+s<24$ und $r+t<23$ sind.

Die Alkylgruppen umfassen sowohl n-Alkylgruppen als auch ihre Isomere, bevorzugt $C_1$ - $C_{20}$-Alkylgruppen, insbesondere bevorzugt $C_1$ - $C_{10}$-Alkylgruppen.

Die Arylgruppen umfassen insbesondere Phenyl-, Naphthyl-, Biphenyl-, Anthracyl-Gruppen.

Die Alkylarylgruppen umfassen insbesondere Tolyl-, Xylyl-, Ethylphenyl-, Propylphenyl-, tertiäre Butylphenyl-Gruppen.

Die Aralkylgruppen umfassen insbesondere Benzyl-, Phenethyl-, Benzhydryl- und Trityl-Gruppen.

Die Heteroarylgruppen umfassen insbesondere Piridyl-, Picolyl-, Bipyridyl- und Collidyl-Gruppen.

Die Acylgruppen umfassen insbesondere Formyl-, Acetyl-, Propionyl-, Butyryl-, Isobutyryl-, Valeryl-, Isovaleryl-, Stearyl-, Oleyl- und Palmitoyl-Gruppen.

Die S-enthaltenden Gruppen umfassen insbesondere Methylsulphonyl-, Ethylsulphonyl-, Hexylsulphonyl-, Dodecylsulphonyl-, Methylthio-, Butylthio-, Hexylthio-Gruppen.

Die N-enthaltenden Gruppen umfassen insbesondere Amino-, Methylamino-, Ethylamino-, Propylamino-, Hexylamino-, Dodecylamino- und Imidazoyl-Gruppen.

Die Silylgruppen umfassen insbesondere Trimethylsilyl- und tertiäre Butyldimethylsilyl-Gruppen.

Das Cyclodextrin ist bevorzugt ein β-Cyclodextrinmolekül.

Weiterhin bevorzugt sind die erfindungsgemäßen lipophilen Cyclodextrinpolymere,
dadurch gekennzeichnet,
daß m und n unabhängig voneinander ein Ganzzahliges von 3 bis 7 sind und/oder r ein Ganzzahliges von 5 bis 17 oder von 8 bis 14 ist, und/oder b ein Ganzzahliges von 5 bis 17 oder von 8 bis 14 ist, und/oder s und t unabhängig voneinander ein Ganzzahliges von 2 bis 5 sind und/oder m, n, r und t, einschließlich in den Seitenketten, innerhalb einer Einheit je unterschiedlich sein können, und, falls CD eine Gruppe ist, die aus einem α-Cyclodextrin stammt, $p+s<13$ und $r+t<14$ sind oder $p+s<10$ und $r+t<10$ sind, und, falls CD eine Gruppe ist, die aus einem β-Cyclodextrin stammt, $p+s<17$ und $r+t<16$ sind und/oder $p+s<10$ und $r+t<9$ und, falls CD eine Gruppe ist, die aus einem gamma-Cyclodextrin stammt, $p+s<20$ und $r+t<19$ sind und/oder $p+s<14$ und $r+t<13$ sind.

Diese lipophilen Cyclodextrinpolymere sind in Lösungsmitteln mit einer niedrigen Dielektrizitätskonstante löslich oder quellbar.

Die lipophilen Cyclodextrinpolymere sind erfindungsgemäß durch zwei Verfahren herstellbar :

a) Durch Vernetzung der geeigneten Cyclodextrinderivate oder
b) durch Derivatisierung der Cyclodextrinpolymere.

a) Geeignete Cyclodextrinderivate sind Alkylderivate, bevorzugt Dimethyl-, Hydroxypropyl- und/oder Palmityl-Derivate, Acylderivate, z.B. Acetyl-, Benzoyl-, Succinyl-, Lauryl- und/oder Palmitoylderviate, Alkylthioderivate, z.B. Methylthioderivate, Alkylsulfonylderivate, z.B. Propylsulfonylderivate, Alkylsulfinylderivate, z.B. Ethylsulfinylderivate und Dodecylsulfinylderivate, Desoxyaminoalkylderivate, z.B. Aminoethylderivate, Silylderivate, z.b. Dimethylsilyl-, Trimethylsilyl- und Tert. Butyl-dimethylsilylderivate, wobei der Substitutionsgrad im Bereich von 0,1 - 2,5 , bevorzugt zwischen 0,5-2,0, liegt.

Der Substitutionsgrad (D.S.) bedeutet die durchschnittliche Zahl an Substituenten auf einer Glucoseeinheit.

Der Substituent auf dem Polymer kann, wenn das erfindungsgemäße Cyclodextrinpolymer durch Derivatisierung des bereits polymerisierten Cyclodextrins hergestellt wird, nicht nur auf den Glucoseeinheiten des Cyclodextrinrings lokalisiert sein, sondern auch auf den verbindenden Glycerylbrücken. Es ist deshalb besser, das Produkt durch die Menge an Substituent in einem Gramm Produkt ausgedrückt in Mol. (meq = mole equivalent) zu charakterisieren.

D.S. = 1 entspricht 3 mMol/g oder 3 meq/g.

Das Produkt mit der größten Substituentenmenge in dieser Patentanmeldung ist das Acetyl-BCD mit 4,2 mMol/g (D.S. = 1,4) Acetylgehalt.

Die erfindungsgemäßen Verbindungen können durch bekannte Verfahren hergestellt werden. Durch die Umsetzung mit Epichlorhydrin, Diepoxiden oder anderen bifunktionellen Reagenzien können die Polymerderivate der lipophilen Ausgangsverbindungen hergestellt werden.

b) Cyclodextrinpolymere zur Herstellung ihrer lipophilen Derivate sind erfindungsgemäß lösliche oder quellfähige Produkte, die durch Polykondensation aus α-, β- und/oder gamma-Cyclodextrin hergestellt werden, bevorzugt durch Vernetzung mit Epichlorhydrin oder Diepoxiden. Diese Polymere können durch solche chemischen Reaktionen modifiziert werden, die zur Derivatisierung der Cyclodextrine selbst

verwendet werden.

Die Reaktionsbedingungen müssen gemäß den Eigenschaften des Cyclodextrinpolymers ausgewählt werden, d.h. das Reaktionsmedium muß so gewählt werden, daß sich das Polymer entweder löst oder daß es quillt, wobei die Polymerstruktur nicht zerstört werden darf. Alkalische wäßrige Lösungen, N,N-Dimethylformamid, Dimethylsulfoxid und Pyridin sind hierbei bevorzugt.

Erfindungsgemäß werden die Cylcodextrinderivate bevorzugt vernetzt, um ein Polymer herzustellen:

1.a) Das Cyclodextrinderivat wird in einer alkalischen wäßrigen Lösung gelöst oder suspendiert. Die Cyclodextrinkonzentration in der Lösung ist im Bereich von 20 - 50 Gew.-%, bevorzugt 30 - 40 Gew.-%, wenn das gewünschte Produkt löslich ist und im Bereich von 40 - 50 Gew.-%, wenn es ein quellfähiges Polymer ist. Die Alkali- oder Erdalkalihydroxydkonzentration, bevorzugt NaOH oder KOH, ist 2 - 8 Gew.-%, wenn ein Diepoxid zur Vernetzung verwendet wird. Wenn Epichlorhydrin als Vernetzungsmittel verwendet wird, ist das molare Verhältnis von Alkalihydroxyd zu Epichlorhydrin 0,8 - 1,2 : 1, bevorzugt 1 : 1. Das Vernetzungsmittel (Epichlorhydrin, 1,2,9,10-Diepoxy-4,7-dioxadecan, 1,2,11,12-Diepoxy-4,9-dioxadodecan) wird tropfenweise unter Rühren bei 20 - 80 °C zugegeben. Das Molverhältnis des Vernetzungsmittels zum Cyclodextrinderivat beträgt 5 - 20 : 1, bevorzugt 10 - 15 : 1 . Die Reaktionsmischung wird für weitere 1 - 4 Stunden gerührt und anschließend abkühlen gelassen. Falls das Produkt ein lösliches Polymer ist, wird es durch Dialyse oder Chromatographie gereinigt und bevorzugt durch Lyophilisation getrocknet. Falls das Produkt ein quellfähiges Polymer ist, wird es mit Wasser bis zur Neutralität gewaschen, mit wäßrigem Aceton bei zunehmender Acetonkonzentration dehydriert und getrocknet.

1.b) In einer weiteren Ausführungsform der Erfindung wird das Cyclodextrinderivat in Dichlormethan, Dichlorethan, Pyridin, Dimethylformamid oder Dimethylsulfoxid, bevorzugt in Dichlormethan oder Dichlorethan, gelöst und als Vernetzungsmittel bevorzugt Epichlorhydrin oder 1,2,9,10-Diepoxy-4,7-dioxadecan zugegeben. Nach dem Rühren wird als Katalysator bevorzugt Trifluoressigsäureanhydrid oder Bortrifluoridetherat zugegeben. Die Cyclodextrinkonzentration in der Lösung beträgt 10 - 50 Gew.-%. Das Molverhältnis des Vernetzungsmittels zum Cyclodextrinderivat beträgt 50 - 20 : 1 , bevorzugt 10 - 15 : 1. Das Reaktionsgemisch wird für weitere 1 - 4 Stunden gerührt und anschließend abkühlen gelassen. Wenn das Produkt löslich ist, wird ein 1 - 5-facher Wasserüberschuß, bezogen auf das Volumen des Reaktionsgemisches, zugegeben und das organische Lösungsmittel abgedampft und die wäßrige Lösung dialysiert und lyophilisiert. Wenn das Produkt ein quellfähiges Polymer ist, wird es mit dem gerade verwendeten organischen Lösungsmittel und anschließend mit Ethanol und/oder Aceton gewaschen und anschließend getrocknet.

2. Herstellung von alkylierten Cyclodextrinpolymeren

Die alkylierten Cyclodextrinpolymere können durch Verbindung der alkylierten Cyclodextrine gemäß den in 1.a) und 1.b) beschriebenen Verfahren hergestellt werden oder durch Alkylierung der Cyclodextrinpolymere. Im letzteren Fall werden 5 - 50 g des Cyclodextrinpolymers gelöst oder in 100 $cm^3$ einer wäßrigen Lösung von 0,1 - 10 Mol/l Alkali- oder Erdalkalihydroxid oder in Pyridin, Dimethylsulfoxid, N,N-Dimethylformamid, enthaltend 0 - 2 Mol Alkalihydroxid pro 1 Mol Alkylierungsmittel, gequollen. Das Alkylierungsmittel (Haloalkane, Alkylsulfate, Alkylepoxide) wird zu dieser Reaktionsmischung gegeben. Das Molverhältnis beträgt 1 - 25 Mole Alkylierungsmittel auf 1 Mol Cyclodextrin im Polymer. Die Alkylierung wird bei Raumtemperatur oder bei einer niedrigeren oder höheren Temperatur ausgeführt. Nach 0,5 - 24 Stunden Reaktionszeit werden die quellfähigen Polymere filtriert, gewaschen und getrocknet, die löslichen Polymere durch Dialyse oder Chromatographie gereinigt und lyophilisiert.

3. Herstellung von acylierten Cyclodextrinpolymeren

Acylierte Cyclodextrinpolymere können durch Verbindung acylierter Cyclodextrine gemäß den in 1.a) und 1.b) beschriebenen Verfahren oder durch Acylierung von Cyclodextrinpolymeren hergestellt werden. Die Acylierung wird in wäßriger Lösung, in organischer Lösung oder in organischer Lösung mit einem minimalen Wassergehalt (Pyridin, Essigsäure, N,N-Dimethylformamid) unter Verwendung organischer oder anorganischer Basen oder Säuren, wasserfreier oder wasser-enthaltender Lewis-Säuren (Aluminiumchlorid, Eisenchlorid, Bortrifluoridetherat, Zinkchlorid) oder ohne Katalyse mit einem geeigneten Säureanhydrid, Acylchlorid, geeigneten Estern oder kurzkettigen Alkoholen oder Cyclodextrinestern, durchgeführt.

Das Produkt kann durch allgemein verwendete Verfahren gereinigt werden :

Die Cyclodextrinmonomere durch Kristallisation,

die Cyclodextrinpolymere durch Waschen oder Dialyse,

beide Produkte durch geeignete chromatographische Verfahren.

Die acylierten Cyclodextrine können während der Polymerisation deacetyliert werden. Der Deacetylationsgrad hängt u.a. vom Substitutionsgrad des Ausgangsmaterials und von den Eigenschaften der Substituenten ab.

4. Herstellung von Stickstoff- oder Schwefel-enthaltenden lipophilen Cyclodextrinpolymeren

Stickstoff- und/oder Schwefel-enthaltende Cyclodextrinpolymere können durch Polymerisation geeigneter Cyclodextrinderivate gemäß dem in 1.a) und 1.b) beschriebenen Verfahren hergestellt werden.

5. Silylierte Cyclodextrinpolymere

Silylierte Cyclodextrinpolymere können durch Verbindung von silylierten Cyclodextrinmonomeren gemäß den in 1.a) und 1.b) beschriebenen Verfahren hergestellt werden oder durch Silylierung von Cyclodextrinpolymeren mit Silylierungsmitteln (Chlortrimethylsilan, 1,1,1,3,3,3-Hexamethyl-disilazan, Tertbutyldimethylsilyl-chlorid) in absoluten organischen Lösungsmitteln (Pyridin, Ether, N,N-Dimethyl-formamid) in Gegenwart oder Abwesenheit organischer oder anorganischer Basen.

Das Produkt kann durch folgende allgemein gebräuchliche Verfahren hergestellt werden :
Die Cyclodextrinmonomere durch Kristallisation,
die Cyclodextrinpolymere durch Waschen oder Dialyse,
beide Produkte durch geeignete chromatographische Verfahren.

Die erfindunsgemäß hergestellten Produkte sind durch ihren Cyclodextringehalt gekennzeichnet, durch ihren Gehalt an Substituenten und durch den geschätzten Substitutionsgrad, bezogen auf den Cyclodextringehalt des Polymeren.

Die Lipophilität der Polymere kann durch ihren Lipophilitätsfaktor gekennzeichnet werden : Das Verhältnis des Sedimentationsvolumens in einem apolaren Lösungsmittel (Benzol) und in einem polaren Lösungsmittel (Wasser). Das Sedimentationsvolumen hängt von der Morphologie der Polymerpartikeln ab, weshalb nur Polymere mit einer ähnlichen Morphologie vergleichbar sind. Der Lipophilitätsfaktor der Cyclodextrinpolymere und der lipophilen Cyclodextrinpolymere beträgt 0,2 - 0,5 bzw. 0,3 - 2,0 .

Die erfindungsgemäß bereitgestellten Produkte behalten ihre Fähigkeit, Einschlußkomplexe zu bilden, ergänzt durch ihre hydrophoben Wechselwirkungen. Diese Produkte können als Sorbentien verwendet werden, um bestimmte Materialen zu adsorbieren und zu konzentrieren. Ihre Sorptionskapazität ist wesentlich höher als diejenigen der nicht-modifizierten Cyclodextrine.

BEISPIEL 1

Wasserlösliches $\beta$-Cyclodextrinpolymer aus Dimethyl-$\beta$-cyclodextrin

5 g (3,8 mMol) Dimethyl-$\beta$-Cyclodextrin wurden in 23 $cm^3$ Dichlorethan bei Raumtemperatur gelöst und hierzu 2,5 $cm^3$ (2,8 g, 1,6 mMol) 1,2,9,10-Diepoxy-4,7-dioxa-decan unter stetigem Rühren zugegeben. 0,25 $cm^3$ (2,2 mMol) Bortrifluoridetherat wurden in 2 $cm^3$ Dichlorethan gelöst und tropfenweise zur Reaktionsmischung zugegeben. Anschließend wurden 0,26 $cm^3$ (2,2 mMol) Bortrifluoridetherat, gelöst in 15 $cm^3$ Dichlorethan, zugegeben. Nach Beendigung der Reaktion wurde die Mischung in 500 $cm^3$ Wasser emulgiert und das Dichlorethan abgedampft. Die niedermolekularen Verunreinigungen wurden durch Dialyse entfernt. Nach der Abdampfung und der Lyophilisation wurden 5 g weißes Pulver erhalten.

Der Cyclodextringehalt, bestimmt durch iodometrische Titration nach saurer Hydrolyse, betrug 58,1 %.
Der Gehalt an Methoxygruppen, bestimmt durch iodometrische Titration, betrug 23,1 %, 2,1 Mol pro Glucoseeinheit. Dies stimmt überein mit der geschätzten Zahl an 2 Mol Methoxygruppen pro Mol Glucoseeinheit.

Das Molekulargewicht des Produktes wurde durch seine Eigenviskosität und die gelchromatographische Molekulargewichtsverteilung bestimmt. Die Eigenviskositätszahl betrug 5,7 $cm^3$/g (Wasser 25 °C).
Die Chromatographiebedingungen waren wie folgt :
Säule : 160 $cm^3$ Ultrogel ACA-34 in einer Pharmacia K 16/100-Säule;
Probe : 300 mg Produkt, gelöst in 5 $cm^3$ destilliertem Wasser
Eluierungsmittel : Destilliertes Wasser
Eluierungsgeschwindigkeit : 30 $cm^3$/min
5 $cm^3$ Proben wurden in einem LKB Ultro Frac-Sammler gesammelt und die optische Aktivität bestimmt. Das auf dem Gelchromatogramm basierende durchschnittliche Molekulargewicht der Probe betrug Mw =

3700, die Polydispersität 1,7.

BEISPIEL 2

Quellfähiges Polymer aus Dimethyl-$\beta$-cyclodextrin

2 g (2,6 mMol) Dimethyl-$\beta$-cyclodextrin wurden bei Raumtemperatur in 7 $cm^3$ Dichlorethan gelöst und hierzu 1 $cm^3$ (16 mMol) 1,2,9,10-Diepoxy-4,7-dioxa-decan unter stetigem Rühren zugegeben. 0,1 $cm^3$ (1,1 mMol) Bortrifluoridetherat wurden in 1 $cm^3$ Dichlorethan gelöst und tropfenweise zugegeben. Nach 1 Stunde wurden 1 $cm^3$ (16 mMol) 1,2,9,10-Diepoxy-4,7-dioxa-decan und 0,1 $cm^3$ (1,1 mMol) Bortrifluoridetherat, gelöst in 2 $cm^3$ Dichlorethan, hinzugegeben. Das Gel-ähliche Produkt wurde mit Dichlorethan und Methanol gewaschen. Die Ausbeute an Produkt betrug 2,5 g .

Sedimentationsvolumen : 2,0 $cm^3$ /g in Benzol, 2,9 $cm^3$ /g in Wasser.

Die Quellfähigkeit ist gekennzeichnet durch den Lipophilitätsfaktor, der bestimmt ist durch das Vehältnis des Sedimentationsvolumens in Benzol und in Wasser : $V_B/V_W$ = 0,8.

BEISPIEL 3

Lösliches Polymer aus acetyliertem Dimethyl-$\beta$-cyclodextrin

1,8 g (1,1mMol) Peracetyl-dimethyl-$\beta$-cyclodextrin und 0,2 g (0,1 mMol) Peracetyl-$\beta$-cyclodextrin wurden in 3 $cm^3$ Wasser, enthaltend 0,5 g (12 mMol) Natriumhydroxid, bei 60 °C gelöst. Hierzu wurde 1 $cm^3$ (12 mMol) Epichlorhydrin tropfenweise zugegeben und anschließend 2,5 Stunden lang gerührt. Die Reaktionsmischung wurde anschließend abgekühlt. Die alkalische wäßrige Lösung wurde vom sedimentierten, honig-ähnlichen Produkt dekantiert. Das Produkt wurde in destilliertem Wasser gelöst, Natriumchlorid und Alkali durch Dialyse entfernt und lyophilisiert. Es wurde ein weißes Pulver erhalten, welches in Wasser, Aceton und Benzol löslich war.

Cyclodextringehalt : 64 %

Eigenviskositätszahl : 5,3 $cm^3$ /g

Geschätztes durchschnittliches Molekulargewicht : 3300.

BEISPIEL 4

Methylierung von $\beta$-Cyclodextrin-Perlpolymer

1 g $\beta$-Cyclodextrin-Perlpolymer (hergestellt gemäß ungarischem Patent 177.419, $\beta$-Cyclodextringehalt : 46 %, (0,4 mMol) wurden in 300 $cm^3$ 30 % (2,25 Mol) Natriumhydroxidlösung gequollen und hierzu 56,7 g (0,36 Mol) Dimethylsulfat tropfenweise bei 0 °C zugegeben. Die Reaktionsmischung wurde bei Raumtemperatur 3 Stunden lang gerührt. Das Produkt wurde abgefiltert, von Alkali freigewaschen und bei 105 °C 1 Stunde lang getrocknet.

Methoxygruppengehalt : 11,7 %

Sedimentationsvolumen : 3,1 $cm^3$/g in Benzol, 4,0 $cm^3$/g in Wasser.

Sedimentationsvolumen des Ausgangspolymers : 2,2 bzw. 4,6 $cm^3$/g.

Der Lipophilitätsfaktor nahm von 0,5 auf 0,8 zu.

BEISPIEL 5

Methylierung eines $\beta$-Cyclodextrin-Blockpolymeren

3 g eines $\beta$-Cyclodextrin-Blockpolymeren ($\beta$-Cyclodextringehalt : 48,2 %, 1,28 mMol vernetzt mit 1,2,9,10-Diepoxy-4,7-dioxadecan) wurden in 120 $cm^3$ einer 30 % (0,9 Mol) Natriumhydroxidlösung bei 5 °C gerührt. Hierzu wurden tropfenweise 42,3 $cm^3$ (0,27 Mol) gekühltes Methylsulfat zugegeben; anschließend wurde die Mischung 1/2 Stunde lang bei 60 °C gerührt. Das Produkt wurde abgefiltert, durch wiederholtes Waschen mit destilliertem Wasser neutralisiert, mit wäßrigen Acetonlösungen zunehmender Konzentration dehydriert und bei 105 °C getrocknet, wobei 3,2 g Produkt erhalten wurde.

Methoxygruppengehalt : 6,2 %

Sedimentationsvolumen : 1,8 $cm^3$/g in Benzol, 3,5 $cm^3$/g in Wasser.

Sedimentationsvolumen des Ausgangspolymeren : 1,1 und 3,3 $cm^3$/g.

Der Lipophilitätsfaktor nahm von 0,3 auf 0,5 zu.

BEISPIEL 6

Methylierung eines β-Cyclodextrin-Blockpolymeren mit einem Gehalt an Polyvinylalkohol

5,5 g eines β-Cyclodextrin-Blockpolymeren (β-Cyclodextringehalt : 48 %, 2,35 mMol Polyvinylalkoholgehalt : 5 %) wurden in 220 $cm^3$ einer 30 % Natriumhydroxidlösung bei -5°C gerührt und tropfenweise 20,5 $cm^3$ (0,13 Mol) Dimethylsulfat zugegeben. Die Reaktionsmischung wurde 1/2 Stunde lang bei 60 °C gerührt. Das Produkt wurde, wie im Beispiel 5 beschrieben, abgefiltert, gewaschen und dehydriert. 5 g Produkt wurden erhalten.
Methoxygruppengehalt : 15,5 %.
Sedimentationsvolumen : 3,6 $cm^3$/g in Benzol, 4,9 $cm^3$/g in Wasser.
Sedimentationsvolumen des Ausgangspolymeren : 1,9 und 4,5 $cm^3$/g.
Der Lipophilitätsfaktor erhöhte sich von 0,4 auf 0,7.

BEISPIEL 7

Butylierung eines α-Cyclodextrin-Perlpolymeren

10 g eines α-Cyclodextrin-Perlpolymeren (α-Cyclodextringehalt: 57,2 %, 5,9 mMol, Teilchengröße 80 - 250 μm) wurden in 100 $cm^3$ Dimethylsulfoxid bei Raumtemperatur gerührt. 5 g Natriumhydroxidpulver (0,125 Mol) wurden gelöst und während 1 Stunde 5 $cm^3$ (0,044 Mol) 1-Brombutan tropfenweise zugegeben. Die Reaktionsmischung wurde über Nacht gerührt, anschließend abgefiltert, mit verdünnter Salzsäure und Wasser gewaschen, mit Aceton dehydriert und bei 80°C unter Vakuum getrocknet. 11,2 g Produkt wurden erhalten.
Sedimentationsvolumen : 4,3 $cm^3$/g in Benzol, 5,0 $cm^3$/g in Wasser.
Sedimentationsvolumen des Ausgangspolymeren : 1,3 und 6,0 $cm^3$/g.
Der Lipophilitätsfaktor nahm von 0,3 auf 0,5 zu.

BEISPIEL 8

Hydroxypropylierung eines Gamma-Cyclodextrin-Perlpolymeren

1,2 g (0,03 Mol) Natriumhydroxid wurden in 50 $cm^3$ Wasser gelöst und 10 g Gamma-Cyclodextrin-Perlpolymer (Cyclodextringehalt : 51 %, 3,9 mMol, Teilchengröße 80 - 250 μm) wurden in dieser Lösung gequollen und hierzu 10 $cm^3$ Propylenoxid (0,148 Mol) zugegeben. Die Reaktionsmischung wurde über Nacht gerührt, anschließend abgefiltert, neutralisiert, dehydriert und getrocknet. 17,1 g Produkt wurden erhalten.
Sedimentationsvolumen : 2,5 $cm^3$/g in Benzol, 4,3 $cm^3$/g in Wasser.
Sedimentationsvolumen des Ausgangspolymeren : 1,9 bzw. 4,8 $cm^3$/g.
Der Lipophilitätsfaktor nahm von 0,4 auf 0,6 zu.

BEISPIEL 9

6-Hydroxyhexyl-β-Cyclodextrin-Perlpolymer

5,0 g (2,2 Mol) eines β-Cyclodextrin-Perlpolymeren (β-Cyclodextringehalt : 51 %, 2,2 mMol, Teilchengröße 100 - 300 μm) wurden bei 80°C unter stetigem Rühren in 40 $cm^3$ Wasser, enthaltend 4,0 g ( 0,071 Mol) Kaliumhydroxid, gequollen. 6-Chlor-1-hexanol (4 $cm^3$, 0,035 Mol) wurden zugegeben und für 24 Stunden gerührt. Nach Ende der Reaktion wurde das Polymer abgefiltert, mit Salzsäure gesäuert, mit Wasser zur Neutralität gewaschen, mit Aceton dehydriert und bei 80 °C unter Vakuum getrocknet.
Erhaltenes Trockenmaterial : 8,0 g.
Hydroxyhexylgehalt : 60 % ( bezogen auf die Gewichtszunahme ), d.h. 1,4 Hydroxyhexylgruppen pro Cyclodextrineinheiten;
Sedimentationsvolumen : 4,0 $cm^3$/g in Wasser, 1,5 $cm^3$/g in Benzol.
Der Lipophilitätsfaktor erhöhte sich von 0,4 auf 0,6.

BEISPIEL 10

Acetyliertes β-Cyclodextrin-Perlpolymer

Verfahren 1.

100 g eines trockenen β-Cyclodextrin-Perlpolymeren (β-Cyclodextringehalt : 53,5 %, 47 mMol) wurden in wasserfreiem Pyridin (836 $cm^3$) und in Acetanhydrid (580 $cm^3$, 5,24 Mol) suspendiert. Nach 15minütigem Rühren bei Raumtemperatur wurde die Reaktionsmischung 16 Stunden lang stehen gelassen. Anschließend wurde für weitere 16 Stunden stetig gerührt (einschl. eines Abkühlungszeitraums auf Raumtemperatur) worauf eine fünfstündige Erhitzungsphase bei 60 ° C folgte.

Das Polymer wurde abfiltriert, mit Aceton und Wasser gewaschen, mit wasserhaltiger Salzsäure verdünnt und anschließend wieder mit Wasser und Aceton gewaschen.
Trockenmaterialausbeute : 145 g;
Acetylgehalt : 25,5 %, d.h. 16,8 Acetylgruppen pro Cyclodextrineinheiten;
Sedimentationsvolumen : 2,0 $cm^3$/g in Wasser;
2,2 $cm^3$/g in Ethanol;
3,0 $cm^3$/g in Methanol;
3,0 $cm^3$/g in Benzol;
Der Lipophilitätsfaktor erhöhte sich von 0,4 auf 1,5.

Verfahren 2.

10,0 g eines β-Cyclodextrin-Perlpolymeren ( β-Cyclodextringehalt : 14,9 mMol, Teilchengröße : 10 - 100 µm) wurden in Acetanhydrid (40 $cm^3$) bei 25 ° C suspendiert und hierzu wasserfreies Eisen-(III)-chlorid (0,32 g, 2 mMol) zur Suspension zugegeben. Die Reaktionsmischung wurde 24 Stunden lang bei Raumtemperatur (25 ° C) gerührt. Das Polymer wurde abfiltriert, zweimal zum Neutralisieren mit Wasser (20 $cm^3$) und anschließend zweimal mit Aceton (40 $cm^3$) gewaschen. Das Produkt (11,2)g wurde 6 Stunden lang bei 60 ° C über Kaliumhydroxid und anschließend 4 Stunden lang bei 105 ° C unter Vakuum getrocknet.
Trockenmaterialausbeute : 9,6 g;
Acetylgehalt : mind. 0,5 %;
Sedimentationsvolumen : 2,5 $cm^3$/g in Wasser;
0,7 $cm^3$/g in Benzol;
Der Lipophilitätsfaktor erhöhte sich von 0,2 auf 0,3.

BEISPIEL 11

Palmitoyliertes β-Cyclodextrin-Perlpolymer

10,0 g eines β-Cyclodextrin-Perlpolymeren (4,5 mMol, β-Cyclodextringehalt: 51%, Teilchengröße : 100 - 300 µm) wurden in abs. Pyridin (50 $cm^3$) 30 Min. lang gequollen; anschließend wurde Palmitoylchlorid (17,5 g, 0,064 Mol) zugegeben und über Nacht gerührt. Das Polymer wurde abfiltriert, mit Wasser (10*50 $cm^3$) und Aceton gewaschen und anschließend bei 80 ° C unter Vakuum getrocknet.
Trockenmaterialausbeute : 16,3 g;
Sedimentationsvolumen : 2,2 $cm^3$/g in Wasser;
3,1 $cm^3$/g in Benzol (die Werte für das Ausgangspolymer sind 1,9 $cm^3$/g bzw. 4,8 $cm^3$/g);
Der Lipophilitätsfaktor erhöhte sich von 0,4 auf 1,4.

BEISPIEL 12

Dodecylsulfonyl-β-Cyclodextrin-Perlpolymer

10,0 g eines β-Cyclodextrin-Perlpolymeren ( β-Cyclo-dextringehalt: 46%, Teilchengröße : 90 - 300 µm) wurden in Pyridin (50 $cm^3$) 30 Min. lang gequollen; anschließend wurde Dodecylsulfonylchlorid (8,8 g, 0,03 Mol) zugegeben und über Nacht gerührt. Das Polymer wurde abfiltriert, mit Wasser (10*50 $cm^3$) gewaschen, mit Aceton dehydriert und unter Vakuum getrocknet.
Trockenmaterialausbeute : 17,1 g;
Schwefelgehalt : 1,9 %;

Sedimentationsvolumen : 3,1 $cm^3$/g in Wasser;
2,7 $cm^3$/g in Benzol
Der Lipophilitätsfaktor erhöhte sich von 0,5 auf 0,9.

BEISPIEL 13

N-Octylamino-β-Cyclodextrin-Perlpolymer

10,0 g eines N-Octylamino-desoxy-β-cyclodextrins (DS: 1,1) wurden in 20 % einer wäßrigen Natriumhydroxidlösung (10 $cm^3$, 12,5 mMol) bei 60 °C gelöst. Anschließend wurde Epichlorhydrin (4 $cm^3$) zugegeben, 30 Min. lang bei 60 °C gerührt und anschließend in Paraffinöl (30 $cm^3$) unter stetigem Rühren für weitere 5 Stunden dispergiert.
Das Polymer wurde abfiltriert, zum Neutralisieren mit Wasser gewaschen und mit Aceton dehydriert und anschließend bei 80 °C unter Vakuum getrocknet.
Trockenmaterialausbeute : 10,4 g;
β-Cyclodextringehalt : 41 %
Stickstoffgehalt : 2,1 %;
Sedimentationsvolumen : 3,0 $cm^3$/g in Wasser;
2,3 $cm^3$/g in Benzol
Lipophilitätsfaktor : 0,8

BEISPIEL 14

S-Butylthio-desoxy-β-cyclodextrin-Perlpolymer

S-Butylthio-desoxy-β-cyclodextrin (10,0 g, 5,4 mMol, DS: 0,85) wurden bei 60 °C unter Rühren in 5 % einer wäßrigen Natriumhydroxidlösung (15 $cm^3$, 18,8 mMol) unter einer inerten Atmosphäre gelöst. 1,2,11,12-Diepoxy-4,9-dioxa-dodecan ( 15 $cm^3$, 30 mMol) wurden zugegeben. Nach 10 Stunden wurde die Lösung in Paraffinöl (50 $cm^3$) dispergiert. Das Polymer wurde nach 5 Stunden filtriert, mit Salzsäure gesäuert, zum Neutralisieren mit Wasser gewaschen, mit Aceton dehydriert und bei 80 °C unter Vakuum getrocknet.
Trockenmaterialausbeute : 10,5 g;
Partikelgröße : 10 - 400 µm;
Cyclodextringehalt : 43 %
Schwefelgehalt : 2,0 %;
Sedimentationsvolumen : 3,1 $cm^3$/g in Wasser;
2,5 $cm^3$/g in Benzol
Lipophilitätsfaktor : 0,8

BEISPIEL 15

Trimethylsilylierung eines β-Cyclodextrin-Perlpolymeren

Verfahren 1.

10,0 g eines β-Cyclodextrin-Perlpolymeren (β-Cyclodextringehalt : 56 %, 4,9 mMol β-Cyclodextrin, Teilchengröße : 10 - 100 µm) wurden in abs. Diethylether (100 $cm^3$) bei 25 °C suspendiert. Trimethylsilylchlorid (4,35 g, 0,040 Mol) wurden auf einmal zugegeben. Zu diesem Reaktionsgemisch wurde bei 25 °C abs. Triethylamin (4,45 g, 0,044 Mol) tropfenweise zugegeben, bis zum Kochen erhitzt, 2 Stunden lang unter Rückfluß und weitere 18 Stunden bei 25 °C gerührt.
Das Polymer wurde abfiltriert, zweimal mit eiskaltem Wasser (20 $cm^3$) und anschließend zweimal mit Aceton (40 $cm^3$) gewaschen.

Das Produkt (14,8 g) wurde über Kaliumhydroxid 6 Stunden lang bei 60 °C und anschließend 4 Stunden lang bei 105 °C unter Vakuum getrocknet.
Trockenmaterialausbeute : 10,13 g;
Siliciumgehalt : mind. 0,5 %
Sedimentationsvolumen : 4,0 $cm^3$/g in Wasser;
1,1 $cm^3$/g in Benzol

Der Lipophilitätsfaktor erhöhte sich von 0,2 auf 0,3.

Verfahren 2.

10,0 g eines β-Cyclodextrin-Perlpolymeren (Ausgangsmaterial vergleiche Beispiel 15, Verfahren 1.) wurden in abs. Pyridin (50 $cm^3$) und 1,1,1,3,3,3-Hexamethyldisilazan (1,91g, 0,012 Mol) bei 25 °C suspendiert. Hierzu wurde Trimethylsilylchlorid (2,15 g, 0,020 Mol) tropfenweise bei 25 °C zugegeben. Die Reaktionsmischung wurden auf 60 °C erhitzt, 2 Stunden lang bei 60 °C und weitere 18 Stunden bei 25 °C gerührt.

Das Polymer wurde abfiltriert, zweimal mit eiskaltem Wasser (20 $cm^3$) und zweimal mit Aceton (40 $cm^3$) gewaschen .
Das Produkt (14,6 g) wurde über Kaliumhydroxid 6 Stunden lang bei 60 °C und weitere 4 Stunden bei 105 °C unter Vakuum getrocknet.
Trockenmaterialausbeute : 10,22 g;
Siliciumgehalt : mind. 0,7 %
Sedimentationsvolumen : 4,0 $cm^3$/g in Wasser;
1,7 $cm^3$/g in Benzol
Der Lipophilitätsfaktor erhöhte sich von 0,2 auf 0,4.

Verfahren 3.

10,0 g eines β-Cyclodextrin-Perlpolymeren (Ausgangsmaterial vergleiche Beispiel 15, Verfahren 1.) wurden in abs. N,N-Dimethylformamid (50 $cm^3$) und 1,1,1,3,3,3-Hexamethyldisilazan (4,04 g, 0,025 Mol) bei 25 °C suspendiert. Die Reaktionsmischung wurde bis zum Kochen erhitzt, 2 Stunden lang unter Rückfluß und weitere 18 Stunden bei 25 °C gerührt.
Das Polymer wurde abfiltriert, zweimal mit eiskaltem Wasser (20 $cm^3$) und zweimal mit Aceton (40 $cm^3$) gewaschen .
Das Produkt (15,2 g) wurde über Kaliumhydroxid 6 Stunden lang bei 60 °C und anschließend 4 Stunden bei 105 °C unter Vakuum getrocknet.
Trockenmaterialausbeute : 10,45 g;
Siliciumgehalt : mind. 1,4 %
Sedimentationsvolumen : 3,7 $cm^3$/g in Wasser;
1,2 $cm^3$/g in Benzol
Der Lipophilitätsfaktor erhöhte sich von 0,2 auf 0,3.

BEISPIEL 16

tertButyl-dimethylsilylierung eines β-Cyclodextrin-Perlpolymeren

10,0 g eines β-Cyclodextrin-Perlpolymer (β-Cyclodextringehalt: 56 %, 4,9 mMol β-Cyclodextrin, Teilchengröße : 10 - 100 µm) wurden in abs. Pyridin (40 $cm^3$) bei 25 °C suspendiert. tertButyl-dimethylsilylchlorid (3,77 g, 0,025 Mol) wurden tropfenweise zu abs. N,N-Dimethylformamid (10 $cm^3$) zugegeben, auf 60 °C erhitzt, 2 Stunden bei 60 °C und weitere 18 Stunden bei 25 °C gerührt.
Das Polymer wurde abfiltriert, zweimal mit eiskaltem Wasser (20 $cm^3$) und zweimal mit Aceton (40 $cm^3$) gewaschen .
Das Produkt (12,4 g) wurde über Kaliumhydroxid 6 Stunden lang bei 60 °C und weitere 4 Stunden bei 105 °C unter Vakuum getrocknet.
Trockenmaterialausbeute : 9,71 g;
Siliciumgehalt : mind. 0,5 %
Sedimentationsvolumen : 3,8 $cm^3$/g in Wasser;
1,3 $cm^3$/g in Benzol
Der Lipophilitätsfaktor erhöhte sich von 0,2 auf 0,3.

BEISPIEL 17

Phenolsorption aus wäßriger Lösung

Aus einem in Wasser gequollenen, methylierten β-Cyclodextrinperlpolymeren (BEISPIEL 4, 2,5g) wurde eine Chromatographiesäule ($V_o$ = 10 $cm^3$) hergestellt. Durch diese Säule wurde eine 0,1 % Phenollösung und nach der Regeneration eine 1 % Phenollösung geschickt. Nach einer anschließenden Regeneration wurde eine 3 % Phenollösung durch die Säule geschickt. 10 $cm^3$-Fraktionen wurden gesammelt. Der Phenolgehalt wurde durch Spektrophotometrie bei 267 nm bestimmt. Dieses Verfahren wurde mit dem Ausgangs-β-Cyclodextrin-Perlpolymeren ($V_o$ = 11,7 $cm^3$) wiederholt. Das sorbierte Phenol/ β-Cyclodextrin-Molverhältnis, das sorbierte Phenol-/1g β-Cyclodextrin-Perlpolymer-Verhältnis und das Volumen der Phenol-freien Fraktionen (vermindert um $V_o$) sind in der nachfolgenden Tabelle aufgeführt.

| Phenol (PhOH) | Ausgangs-βCD-Perlpolymer | | | Methyliertes-βCD Perlpolymer | | |
|---|---|---|---|---|---|---|
| Konzentr. (%) | PhOH/βCD Molverh. | PhOH/Perlpolymer (g/g) | PhOH frei Vol. ($cm^3$) | PhOH/βCD Molverh. | PhOH/Perlpolymer (g/g) | PhOH frei Vol. ($cm^3$) |
| 0,1 | 0,53 : 1 | 0,02 | 28 | 0,78 : 1 | 0,03 | 55-60 |
| 1 | 4,52 : 1 | 0,17 | 13 | 8 : 1 | 0,30 | 40 |
| 3 | 7,57 : 1 | 0,28 | 3 | 23 : 1 | 0,87 | 35 |

BEISPIEL 18

p-Cresol-Sorption aus wäßrigen Lösungen

Eine p-Cresollösung (0,1%) wurde durch eine nach BEISPIEL 17 hergestellte Säule geschickt. Der p-Cresol-Gehalt wurde durch Spektrophotometrie bei 266 nm gemessen.
Im Fall des β-Cyclodextrin-Perlpolymeren :
$V_o$ = 11,7 $cm^3$;
Sorbiertes p-Cresol/-β-Cyclodextrin-Molverhältnis : 0,61 : 1;
p-Cresol-freies-Volumen (vermindert um $V_o$): 43 $cm^3$.
Im Fall des methylierten-β-Cyclodextrin-Perlpolymeren :
$V_o$ = 10 $cm^3$ ;
Sorbiertes p-Cresol/β-Cyclodextrin-Molverhältnis : 1,1 : 1;
p-Cresol-freies-Volumen (vermindert um $V_o$) : 105 $cm^3$ .

BEISPIEL 19

Benzol-Sorption aus wäßrigen Lösungen

Eine Benzollösung (0,04 %) wurde durch eine nach BEISPIEL 17 hergestellte Säule geschickt. Der Benzol-Gehalt wurde durch Spektrophotometrie bei 247 nm gemessen.
Im Fall des β-Cyclodextrin-Perlpolymeren :
$V_o$ = 11,7 $cm^3$;
Sorbiertes Benzol/β-Cyclodextrin-Molverhältnis : 0,54 : 1;
Benzol-freies-Volumen (vermindert um $V_o$): 38 $cm^3$.
Im Fall des methylierten-β-Cyclodextrin-Perlpolymeren :
$V_o$ = 10 $cm^3$ ;
Sorbiertes Benzol/β-Cyclodextrin-Molverhältnis : 0,63 : 1;
Benzol-freies-Volumen (vermindert um $V_o$) : 90 $cm^3$ .

Beispiel 20

2 g Polymere (A : β-Cyclodextrinpolymer (BCDP); B:Diethylenaminoethyl-BCDP (DEAE-BCDP); C: Carboxymethyl-BCDP (CM-BCDP)) wurden in 8 ml einer wäßrigen Ethanollösung (50 %v/v), mit einem Gehalt an 1,25 % Salicylsäure gequollen, zwei Stunden lang geschüttelt, bei Raumtemperatur über Nacht

und anschließend bei 105 °C weitere zwei Stunden lang getrocknet. Die Erzeugnisse sind gekennzeichnet durch ihren Gehalt an Salicylsäure und ihrer Auflösungseigenschaften.

Der Salicylsäuregehalt wurde bestimmt durch wiederholtes Kochen der 0,25 g Probe in 20 ml Phosphatpufferlösung (pH = 7,2), Filtrierung und anschließender photometrischer Messung der Konzentration im abgekühlten Filtrat bei λ = 296 nm. Dieses Verfahren wurde vier Mal wiederholt und die Summe der Ergebnisse errechnet.

Die Auflösungsgeschwindigkeit wurde durch Rühren von 0,2 g der Probe mit einem Magnetrührer in 20 ml destilliertem Wasser oder in einer Phosphatpufferlösung von pH = 7,2 bei 37 °C bestimmt. Proben aus dem Lösungsüberstand wurden zu bestimmten Zeiten (im Bereich von 1 - 60 Min) entnommen und die Konzentration spektrophotometrisch bestimmt. Die Erzeugnisse sind gekennzeichnet durch die gelöste Menge in 60 Min, ausgedrückt in Prozent der Gesamtaufnahme an aktivem Bestandteil.

| Beschreibung des β-CD-Polymers | | | Eigenschaften der Produkte | | |
|---|---|---|---|---|---|
| ionische Gruppe | Gehalt an ionischer Gruppe (meq/g) | Quellung (ml/g) | Salicylsäure Gehalt (%) | gelöste Menge in Wasser in 60 Min. (%) | gelöste Mengein Puffer in 60 Min. (%) |
| - | - | 5,0 | 4,3 | 54 | 81 |
| DEAE | 0,43 | 4,0 | 4,1 | 18 | 61 |
| CM | 0,62 | 3,6 | 4,4 | 58 | 99 |

Beispiel 21

1,2 g Ethacridinlactat werden in 90 ml 50% (v/v) Ethanol gelöst. 6 ml dieser Lösung werden zu 1,5 g β-Cyclodextrinpolymer zum Quellen gegeben. Die Suspension wird 1 Stunde lang geschüttelt, an der Luft zum Trocknen stehengelassen und anschließend bei 105 °C zwei Stunden lang getrocknet.

Der Gehalt an Ethacridinlactat wird gem. Beispiel 1 bestimmt mit der Ausnahme, daß die Probe in einer Lösung aus etwa 0,1 g Benzoesäure in 50 % (v/v) Ethanol gekocht und anschließend spektrophotometrisch bei λ = 370 nm gemessen wird. Die Auflösungsgeschwindigkeit wird, wie im Beispiel 1 beschrieben, bestimmt.

| Beschreibung des β-CD-Polymers | | | Eigenschaften der Produkte | |
|---|---|---|---|---|
| ionische Gruppe | Gehalt an ionischer Gruppe (meq/g) | Quellung (ml/g) | Ethacridinlactat-Gehalt (%) | gelöste Menge in Wasser in 60 Min. (%) |
| - | - | 5,0 | 5,0 | 86 |
| CM | 0,04 | 5,0 | 5,2 | 70 |
| CM | 0,07 | 3,3 | 5,3 | 72 |
| CM | 0,09 | 3,7 | 4,9 | 61 |
| CM | 0,11 | 4,7 | 5,3 | 50 |
| CM | 0,17 | 4,3 | 5,2 | 27 |
| CM | 0,22 | 4,4 | 5,4 | 20 |
| CM | 0,35 | 4,8 | 5,4 | 7,7 |
| CM | 0,62 | 3,6 | 5,2 | 3,5 |
| CM | 0,73 | 3,1 | 4,7 | 1,5 |

Beispiel 22

0,24 g Methylenblau werden in 90 ml 50 % (v/v) Ethanol gelöst. 20 ml dieser Lösung werden zu 5 g β-Cyclodextrinpolymer zum Quellen gegeben. Die Suspension wird 2 Stunden lang geschüttelt, an der Luft zum Trocken stehengelassen und anschließend bei 105 °C getrocknet.
Die Produkte werden wie im Beispiel 2 beschrieben bestimmt, wobei die spektrophotometrischen Messungen bei $\lambda$ = 661 nm durchgeführt werden.

| Beschreibung des β-CD-Polymers | | | Eigenschaften der Produkte | |
|---|---|---|---|---|
| ionische Gruppe | Gehalt an ionischer Gruppe (meq/g) | Quellung (ml/g) | Methylenblau Gehalt (%) | gelöste Menge in Wasser in 60 Min. (%) |
| - | - | 5,0 | 1,2 | 34 |
| CM | 0,06 | 4,8 | 1,3 | 32 |
| CM | 0,62 | 3,6 | 1,2 | 9,2 |

**Patentansprüche**

**1.** Lipophiles Cyclodextrinpolymerderivat der folgenden allgemeinen Formel

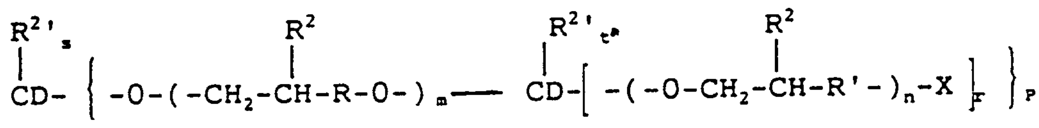

wobei
CD aus einem α-, β- und/oder gamma-Cyclodextrinmolekül durch Abspaltung von p+s- oder 1+t+r-Hydroxylgruppen stammt,
R und R'unabhängig voneinander aus der folgenden Gruppe ausgewählt werden :
$-CH_2-$ , $-CHOH-CH_2-$ , $-CH_2-O-(CH_2)_2-O-CH_2-CHOH-CH_2-$ , $-CH_2-O-CH_2-CHOH-CH_2-$ or $-CH_2-O-(CH_2)_4-O-CH_2-CHOH-CH_2-$
X $OR^1$ oder $R^2$ bedeutet, wobei
$R^1$ ein Wasserstoffatom oder - falls r nicht 0 ist - eine Gruppe darstellt, welche durch die Abspaltung eines Wasserstoffatoms aus einer Hydroxylgruppe aus einem α-, β- oder γ-Cyclodextrinmolekül erhalten wird.
$R^2$ gleiche oder verschiedene Bedeutungen aufweist, nämlich $OR^3$ oder eine Alkylthio-, Alkylsulfonyl-, Alkylsulfinyl- oder Aminoalkylgruppe mit 1-20 Kohlenstoffatomen, bevorzugt mit 1 bis 6 C-Atomen, oder eine Gruppe darstellt, welche durch die Abspaltung eines Wasserstoffatoms aus einer Hydroxylgruppe aus einem α-, β- oder γ-Cyclodextrinmolekül erhalten werden,
$R^{2'}$ der Bedeutung von $R^2$ entspricht, jedoch keine der Gruppen darstellt, die aus den Cyclodextrinmolekülen erhalten wurden, welche durch die Abspaltung eines Wasserstoffatoms aus einer Hydroxylgruppe aus einem α-, β- oder γ-Cyclodextrinmolekül erhalten wird,
$R^3$ eine Alkyl-Gruppe mit 1 - 20 C-Atomen, bevorzugt mit 1 bis 6 C-Atomen, oder eine Aralkyl-oder Alkylarylgruppe darstellt, wobei die Arylgruppe aus einer aromatischen oder heteroaromatischen Verbindung abstammt, oder $R_3$ eine $C_1$ - $C_7$-Acylgruppe oder eine unsubstituierte oder $C_1$ - $C_5$-mono-, di- oder trisubstituierte Silylgruppe darstellt.
m und n unabhängig voneinander ein ganzzahliges von 1 - 10 sind,
r ein ganzzahliges von 0 - 23 ist,
p ein ganzzahliges von 0 - 24 ist,
s und t unabhängig voneinander ein ganzzahliges von 0 - 7 sind,
m, n, r und t, einschließlich in den Seitenketten, innerhalb einer Einheit je unterschiedlich sein können,
und, falls CD eine Gruppe ist, die aus einem α-Cyclodextrin stammt, $p+s<18$ und $r+t<17$ sind,
und, falls CD eine Gruppe ist, die aus einem β-Cyclodextrin stammt, $p+s<21$ und $r+t<20$ sind,
und, falls CD eine Gruppe ist, die aus einem gamma-Cyclodextrin stammt, $p+s<24$ und $r+t<23$ sind.

**2.** Lipophiles Cyclodextrinpolymer nach Anspruch 1, dadurch gekennzeichnet, daß die Alkylgruppen sowohl n-Alkylgruppen als auch ihre Isomere, bevorzugt $C_1$ - $C_{20}$-Alkylgruppen, insbesondere bevorzugt $C_1$ - $C_{10}$-Alkylgruppen umfassen.

**3.** Lipophiles Cyclodextrinpolymer nach Anspruch 1, dadurch gekennzeichnet, daß die Arylgruppen insbesondere Phenyl-, Naphthyl-, Biphenyl-, Anthracyl-Gruppen umfassen.

**4.** Lipophiles Cyclodextrinpolymer nach Anspruch 1, dadurch gekennzeichnet, daß die Alkylarylgruppen insbesondere Tolyl-, Xylyl-, Ethylphenyl-, Propylphenyl-, tertiäre Butylphenyl-Gruppen umfassen.

**5.** Lipophiles Cyclodextrinpolymer nach Anspruch 1, dadurch gekennzeichnet, daß die Aralkylgruppen insbesondere Benzyl-, Phenethyl-, Benzhydryl- und Trityl-Gruppen umfassen.

**6.** Lipophiles Cyclodextrinpolymer nach Anspruch 1, dadurch gekennzeichnet, daß die Heteroarylgruppen insbesondere Piridyl-, Picolyl-, Bipyridyl- und Collidyl-Gruppen umfassen.

**7.** Lipophiles Cyclodextrinpolymer nach Anspruch 1, dadurch gekennzeichnet, daß die Acylgruppen insbesondere Formyl-, Acetyl-, Propionyl-, Butyryl-, Isobutyryl-, Valeryl-, Isovaleryl-, Stearyl-, Oleyl- und Palmitoyl-Gruppen umfassen.

**8.** Lipophiles Cyclodextrinpolymer nach Anspruch 1, dadurch gekennzeichnet, daß die S-enthaltenden Gruppen insbesondere Methylsulphonyl-, Ethylsulphonyl-, Hexylsulphonyl-, Dodecylsulphonyl-, Methylthio-, Butylthio-, Hexylthio-Gruppen umfassen.

**9.** Lipophiles Cyclodextrinpolymer nach Anspruch 1, dadurch gekennzeichnet, daß die N-enthaltenden Gruppen insbesondere Amino-, Methylamino-, Ethylamino-, Propylamino-, Hexylamino-, Dodecylamino- und Imidazoyl-Gruppen umfassen.

**10.** Lipophiles Cyclodextrinpolymer nach Anspruch 1, dadurch gekennzeichnet, daß Silylgruppen insbesondere Trimethylsilyl- und tertiäre Butyldimethylsilyl-Gruppen umfassen.

**11.** Lipophiles Cyclodextrinpolymer nach Anspruch 1, dadurch gekennzeichnet, daß das Cyclodextrin ein $\beta$-Cyclodextrinmolekül ist.

**12.** Lipophiles Cyclodextrinpolymer nach Anspruch 1, dadurch gekennzeichnet, daß m und n unabhängig voneinander ein Ganzzahliges von 3 bis 7 sind und/oder r ein Ganzzahliges von 5 bis 17 oder von 8 bis 14 ist, und/oder b ein Ganzzahliges von 5 bis 17 oder von 8 bis 14 ist, und/oder s und t unabhängig voneinander ein Ganzzahliges von 2 bis 5 sind und/oder m, n, r und t, einschließlich in den Seitenketten, innerhalb einer Einheit je unterschiedlich sein können, und, falls CD eine Gruppe ist, die aus einem $\alpha$-Cyclodextrin stammt, $p+s<13$ und $r+t<14$ sind oder $p+s<10$ und $r+t<10$ sind, und, falls CD eine Gruppe ist, die aus einem $\beta$-Cyclodextrin stammt, $p+s<17$ und $r+t<16$ sind und/oder $p+s<10$ und $r+t<9$ und, falls CD eine Gruppe ist, die aus einem gamma-Cyclodextrin stammt, $p+s<20$ und $r+t<19$ sind und/oder $p+s<14$ und $r+t<13$ sind.

**13.** Lipophiles Cyclodextrinpolymer nach einem oder mehreren der vorhergehenden Ansprüche,
dadurch gekennzeichnet,
daß der Substitutionsgrad zwischen 0,05 - 2,5, bevorzugt zwischen 0,1 - 2,5 und weiterhin bevorzugt zwischen 0,5 - 2,0 liegt.

**14.** Verfahren zur Herstellung der lipophilen Cyclodextrinpolymere nach einem oder mehreren der vorhergehenden Ansprüche,
dadurch gekennzeichnet,
daß die α-, β- oder gamma-Cyclodextrine gemäß Anspruch 1 derivatisiert und anschließend durch Vernetzung polymerisiert werden.

**15.** Verfahren zur Herstellung der lipophilen Cyclodextrinpolymere nach einem oder mehreren der vorhergehenden Ansprüche,
dadurch gekennzeichnet,
daß die α-, β- oder gamma-Cyclodextrinpolymere durch Vernetzung polymerisiert und durch die im Anspruch 1 gekennzeichneten Gruppen derivatisiert werden.

**16.** Verwendung der lipophilen Cyclodextrinpolymere nach einem oder mehreren der vorhergehenden Ansprüche zur Herstellung von Einschlußkomplexen mit pharmazeutisch aktiven Verbindungen.